(19) Europäisches Patentamt
European Patent Office
Office européen des brevets

(11) **EP 1 468 889 B1**

(12) **EUROPEAN PATENT SPECIFICATION**

(45) Date of publication and mention
of the grant of the patent:
**17.06.2009 Bulletin 2009/25**

(51) Int Cl.:
**B61D 15/06** *(2006.01)*      **B60R 19/34** *(2006.01)*
**F16F 7/12** *(2006.01)*      **B61F 1/02** *(2006.01)*
**B61G 9/06** *(2006.01)*

(21) Application number: **03008542.7**

(22) Date of filing: **14.04.2003**

(54) **Coupler for a railway vehicle, with a rubber damper and energy absorbing members**

Kupplung für Schienenfahrzeug, mit Kautschukdämpfer und Energieverzehrelement

Attelage central pour un véhicule ferroviaire, avec un amortisseur caoutchouc et un élément d'absorption d'énergie

(84) Designated Contracting States:
**AT BE BG CH CY CZ DE DK EE ES FI FR GB GR HU IE IT LI LU MC NL PT RO SE SI SK TR**

(43) Date of publication of application:
**20.10.2004 Bulletin 2004/43**

(73) Proprietor: **KAWASAKI JUKOGYO KABUSHIKI KAISHA**
**Kobe shi, Hyogo 650-8670 (JP)**

(72) Inventors:
• **Taguchi Makoto**
**Hyogo 655-0884 (JP)**
• **Furukawa Makoto**
**Hyogo 674-0068 (JP)**
• **Okada Shinichi**
**Hyogo 675-0122 (JP)**
• **Yamaguchi Hideyuki**
**Hyogo 673-0014 (JP)**

(74) Representative: **Maxton Langmaack & Partner**
**Patentanwälte**
**Postfach 51 08 06**
**50944 Köln (DE)**

(56) References cited:
EP-A- 1 251 054      FR-A- 2 698 840
US-A- 5 579 699      US-A1- 2003 019 703

**Description**

BACKGROUND OF THE INVENTION

1. Field of the Invention

The present invention relates to a railway vehicle.

2. Related Art

In general, in a railway vehicle, a rubber damper is provided behind a coupler for coupling vehicles to relieve impact in collision. The rubber damper is slidably supported within a support frame (draft lug) riveted to a vehicle body frame of the vehicle.

In FR 2 698 840 a rail vehicle in particular a drivers cab is described. The vehicle shows a metallic structure that is able to absorb energy, which comprises zones of dynamic plastic deformation. The energy absorbing elements are placed fixedly or interchangeably in front of or behind named vehicle.

EP 1 251 054 A2 discloses a collision energy absorbing structure of a vehicle comprising a tubular energy absorbing member with rectangular cross section, provided in the longitudinal direction of the vehicle and having four flat plate portions. The tubular energy absorbing member is adapted to receive a collision force in the longitudinal direction of the vehicle and deformed like bellows by buckling, so as to absorb a collision energy. A deformation starting portion is provided by forming a cutout portion in of the sides of the front end portion of the energy absorbing member.

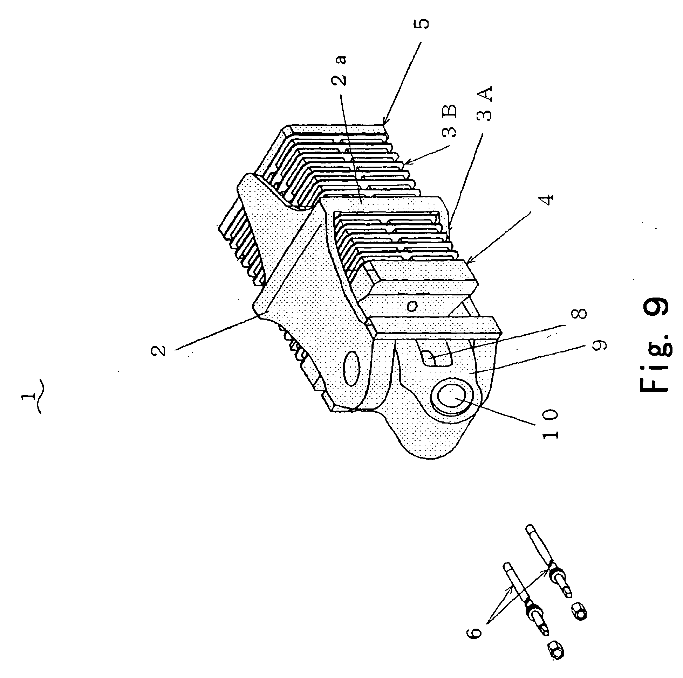

As shown in Fig. 9, a rubber damper 1 comprises a coupler yoke 2 having a separating wall portion 2a, impact absorbing rubbers 3A and 3B (comprised of plate rubber and metal plate arranged alternately) respectively arranged in front of and behind the separating wall portion 2a of the coupler yoke 2, a support member 4 and a support member 5 (metal pad) arranged in front of and behind the impact absorbing rubbers 3A and 3B, respectively, a pair of connecting rod members 6 for integrating the coupler yoke 2, the impact absorbing rubbers 3A and 3B, and the support members 4 and 5. A yoke joint 9 is rotatably coupled to a front end portion of the coupler yoke 2 through a longitudinal pin 8 extending in the vertical direction of a vehicle body.

A front end portion of the yoke joint 9 of the rubber damper 1 is connected to a rear end portion of a coupler (not shown) for coupling vehicles through a coupling pin 10 laterally extending. On collision of a train, if the coupler retracts, then the yoke joint 9 correspondingly retracts, and this retraction stroke is elastically absorbed by extension of the impact absorbing rubber 3A and compression of the impact absorbing rubber 3B.

Thus, the rubber damper 1 absorbs impact (collision) energy by extension or compression of the built-in impact absorbing rubbers 3A and 3B in the longitudinal direction of the vehicle body. When the impact absorbing rubbers 3A and 3B finish a stroke to absorb collision energy, a plurality of rivets for coupling the support frame supporting the rubber damper 1 to the vehicle body frame shear and fracture, thereby preventing a large load (collision load) from being applied on the vehicle body frame. After the rubber damper 1 has finished a stroke and the rivets for coupling the support frame to the vehicle body frame have sheared and fractured, the energy is not absorbed until vehicle body frames collide with each other. This increases a collision load applied in collision between the vehicle body frames and acceleration generated in the vehicle body.

In general, when a compressive load is axially applied on a pipe member designed to have proper dimension and thickness, the pipe member is plastically deformed like bellows to suppress deformation of the overall buckling. From this, it is known that the pipe member is used as an energy absorbing member capable of absorbing collision energy by the bellow-like deformation. The bellows-like deformation of the pipe member allows the collision energy to be stably absorbed, and therefore, a collision energy absorbing structure using the pipe member has been widely used.

As one example of the collision energy absorbing structure using the pipe member, Japanese Laid-Open Patent Application Publication No. Hei. 7 - 186951 discloses an impact absorber including at least one longitudinal element that is deformed to absorb energy generated by impact acting in a predetermined direction. The longitudinal element is an energy absorbing element comprised of thin plates and having a generally triangular cross-section within a plane perpendicular to the direction in which the impact acts.

Accordingly, the impact absorber using the above pipe member may be used to absorb the collision energy after the rubber damper finishes a stroke to absorb impact.

However, in the structure using the above energy absorbing element having the triangular cross-section, many weld lines are required because of its shape complexity, thereby leading to an increased manufacturing cost.

In the case of a pipe member having even sides, adjacent planes are alternately deformed outwardly or inwardly from their normal states, so that the bellows-like deformation stably takes place. But, in the case of using the pipe member having the triangular cross-section, part of the member is not deformed like bellows because it has odd sides, so that the bellows-like deformation is less likely to stably take place.

## SUMMARY OF THE INVENTION

Inventors intensively studied a pipe member that is easily deformed like bellows (plastically deformed), and conceived the present invention capable of relieving a collision load and acceleration caused by collision between vehicle body frames based on the following concepts. The inventors discovered that, using a pipe that is tubular and has a square cross-section over the whole length thereof as an energy absorbing member through which a rubber damper is connected to a vehicle body frame, if a relationship between a width B of the pipe and a wall thickness t thereof satisfies

$$B \leq ( t / 0.526 ) ( E / \sigma y )^{\frac{1}{2}} \qquad (1)$$

where E is Young's modulus of a material of the energy absorbing member and $\sigma y$ is a yield stress of the material, then a buckling pitch (wavelength of wave of buckling) of the flat plate of the energy absorbing member is short, which facilitates bellows-like deformation. In addition, the inventors discovered that a mean crush reaction force of the bellows-like deformation can be predicted with high precision in practice (in design) by using a formula proposed by W. Abramowicz and T. Wierzbicki and larger amount of energy can be absorbed than in the case where the formula (1) is not established.

Accordingly, an object of the present invention is to provide a mounting structure of a rubber damper for a coupler of a railway vehicle which allows bellows-like deformation to stably occur and is capable of reducing a collision load and acceleration caused by collision between vehicle body frames.

According to the present invention, there is provided a railway vehicle as defined in claim 1, comprising a coupler, a rubber damper, and an energy absorbing member that is tubular with a square cross-section, which are arranged in this order in a longitudinal direction of a vehicle body of the vehicle, in which a vehicle body frame is configured to receive a collision load in the longitudinal direction of the vehicle body which is transmitted through the energy absorbing member, **characterized in that** when Young's modulus of a material of the energy absorbing member is E and a yield stress of the material is $\sigma y$, a relationship between a width B of the member and a wall thickness t of the member is represented by $B \leq ( t / 0.526) (E / \sigma y)^{\frac{1}{2}}$.

By increasing/decreasing the number of the energy absorbing members, the amount of collision energy which is absorbed by the entire structure can be adjusted.

In this structure, the energy absorbing member that is tubular with a square cross-section serves to support a rear side of the rubber damper. Therefore, in collision, upon the load in the longitudinal direction of the vehicle being applied, the rubber damper first finishes a stroke to absorb the collision energy and then the following energy absorbing member is deformed like bellows (plastically deformed) to absorb the collision energy. Since the width B and wall thickness t of the flat plate of the energy absorbing member that is tubular with a square cross-section are set to satisfy the formula (1), a buckling pitch of the flat plate of the energy absorbing member is small. As a result, the energy absorbing member is deformed like bellows (plastically deformed) to thereby absorb the collision energy.

In this manner, in collision, the energy absorbing member absorbs the collision energy as well as the rubber damper. Therefore, even when the vehicle body frames eventually collide with each other, acceleration due to the collision is significantly reduced. In addition, this structure is easily achieved by supporting the rear side of the rubber damper by the energy absorbing member that is tubular with a square cross-section at a reduced cost.

It is preferable that, when a length of the energy absorbing member is L1 and a spacing between a coupler face of the coupler and a front end of the vehicle body frame is L2, a relationship between the length L1 and the spacing L2 satisfies:

$$L1 \geq L2. \qquad (2)$$

By setting the length L1 of the energy absorbing member larger than the spacing L2 between the coupler face of the coupler and the front end of the vehicle body frame to satisfy the formula (2) and by designing rivets to have proper shear strength in the structure in which the support frame (draft lug) of the rubber damper is connected to the vehicle body frame by means of the rivets, the energy absorbing member reliably absorbs the collision energy without shear fracture of the rivets until the vehicle body frames collide with each other, after the rubber damper finishes a stroke by retraction of the coupler. As a result, this structure is advantageous in reducing the collision load and acceleration caused by collision.

It is preferable that the rubber damper is supported within a support frame attached to the vehicle body frame, the rubber damper has a coupling portion coupled to the coupler at a front portion thereof and the coupling portion is coupled to the coupler through a spacing between brackets arranged in a lateral direction of the vehicle body at a front portion of the support frame, and the spacing between the brackets in the lateral direction of the vehicle body is sized to permit a body of the coupler to pass therethrough. For example, by setting the spacing W 1 between the right and left brackets supporting the front support member larger than a maximum width W2 of the body of the coupler, the body of the coupler can pass therethrough.

In this structure, since the body of the coupler can pass through the spacing between the right and left brackets and the coupler can retract linearly in collision, the rubber damper and the energy absorbing member are advantageously deformed to absorb the collision energy.

When the connecting pin extending in the lateral direction of the vehicle body to connect the front end portion of the rubber damper (yoke joint) to the rear end portion of the coupler is greatly protruded laterally from the body of the coupler, the brackets arranged in the lateral direction may be each comprised of upper and lower brackets arranged to have a spacing between the upper and lower brackets in a vertical direction of the vehicle body and the spacing between the upper and lower brackets may be sized so that a connecting pin extending in the lateral direction of the vehicle body to connect the rear end portion of the coupler to the rubber damper passes therethrough.

In this structure, even when the connecting pin extending in the lateral direction of the vehicle body to connect the front end portion of the rubber damper (yoke joint) to the rear end portion of the coupler is greatly protruded laterally from the body of the coupler, the protruded portion of the connecting pin can pass through the spacing (spacing between the upper and lower brackets in the vertical direction of the vehicle body), retraction of the coupler is not prevented.

The above and further objects and features of the invention will be more fully be apparent from the following detailed description with the accompanying drawings.

BRIEF DESCRIPTION OF THE DRAWINGS

Fig. 1 is a plan view showing a mounting structure of a rubber damper for a coupler of a railway vehicle according to the present invention;

Fig. 2 is a side view of Fig. 1;

Fig. 3(a) is a front view showing a schematic construction of a tester and a Fig. 3(b) is an enlarged plan view showing a main portion of the tester;

Fig. 4 is a graphical representation showing a relationship between crush amount (displacement) of an energy absorbing pipe member and a reaction force (load) of a vehicle body, which is obtained using the tester in Fig. 3:

Fig. 5 is a graphical representation showing a relationship between a width B of the energy absorbing pipe member and a mean compressive stress of the pipe member of the present invention;

Figs. 6(a) to 6(c) are explanatory views schematically showing deformation modes of an end portion of a railway vehicle having the mounting structure of the rubber damper for the coupler of the railway vehicle according to the present invention;

Fig. 7 is a plan view showing another embodiment of the mounting structure;

Fig. 8 is a side view showing another embodiment of the mounting structure; and

Fig. 9 is a perspective view showing a rubber damper of a railway vehicle.

DETAILED DESCRIPTION OF THE PREFERRED EMBODIMENTS

Hereinafter, an embodiment of the present invention will be described with reference to the accompanying drawings.

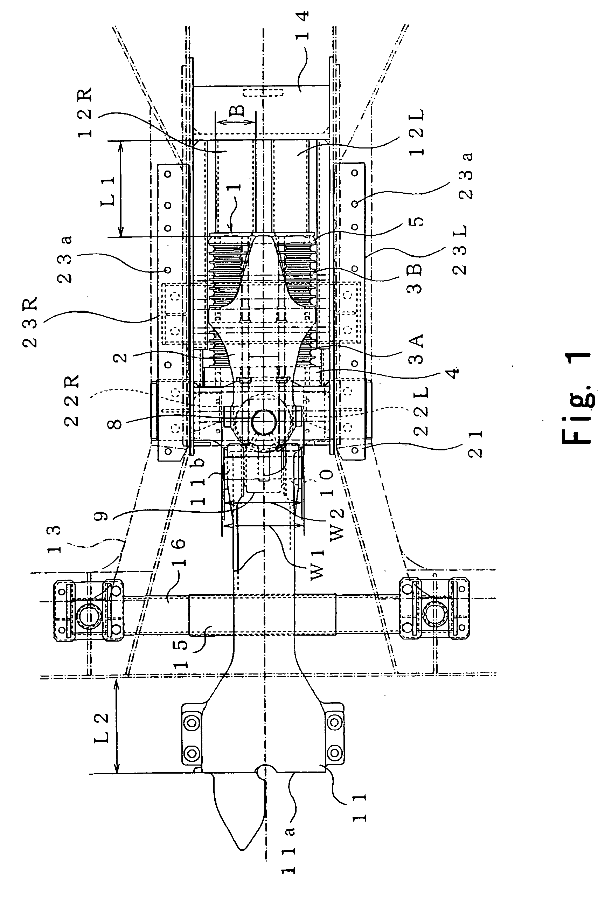

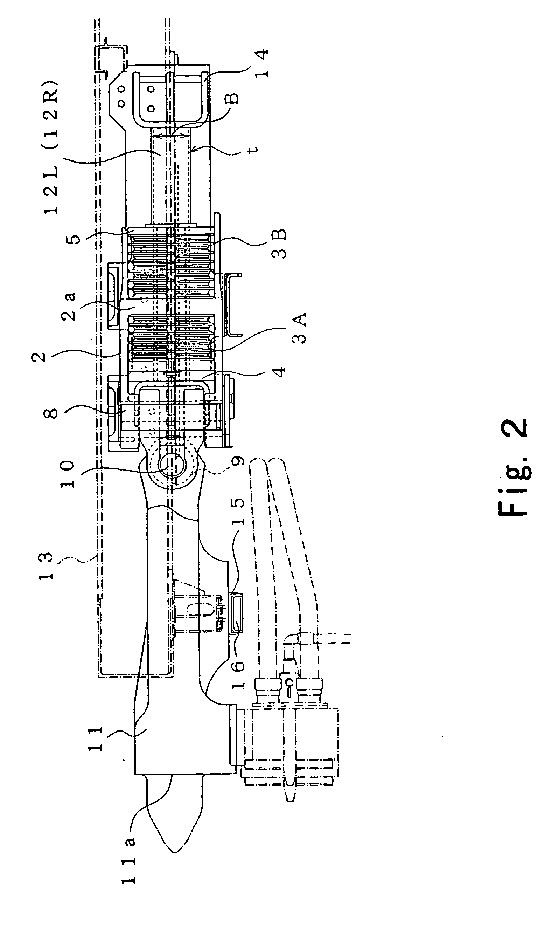

Referring now to Figs. 1 and 2, at a front end portion (or rear portion) of a railway vehicle, a rubber damper 1 is connected to a rear end portion of a coupler 11, and energy absorbing pipe members 12L and 12R which are tubular with square cross-section are provided behind the rubber damper 1 to be parallel to each other and laterally symmetric. The coupler 11, the rubber damper 1 and the energy absorbing pipe members 12L and 12R are arranged in this order in the longitudinal direction of a vehicle body. A collision load in the longitudinal direction of the vehicle body is transmitted to a vehicle body frame 13 through the energy absorbing pipe members 12L and 12R. The rubber damper 1 has a basic structure similar to that of the conventional rubber damper which has been already described in the related art.

Each of the energy absorbing pipe members 12L and 12R has a closed cross-section structure having four flat plates. The energy absorbing pipe members 12L and 12R are set such that, a relationship between a width B of a flat plate of the pipe and a thickness t of the flat plate satisfies:

$$B \le ( t / 0.526 ) ( E / \sigma y )^{1/2} \qquad\qquad (1)$$

where E is Young's modulus of a material of the energy absorbing pipe member and σ y is a yield stress of the material, and a relationship between a length L1 of the pipe members 12L and 12R and a spacing L2 between a coupler face 11a of the coupler 11 and the vehicle body frame 13 satisfies:

$$L1 \geq L2 \qquad\qquad (2)$$

A rear end portion of the coupler 11 is connected to a yoke joint 9 located at a front end of the rubber damper 1 through a connecting pin 10 extending in a lateral direction of the vehicle body. A base end portion of the yoke joint 9 is mounted to a front side of the coupler yoke 2 by means of a longitudinal pin 8 extending in the vertical direction of the vehicle body. The tubular energy absorbing pipe members (energy absorbing member) 12L and 12R with square cross-section extend in the longitudinal direction of the vehicle body. Front end portions of the pipe members 12L and 12R are connected to a rear support member 5 (metal pad) of the rubber damper 1 and rear end portions thereof are coupled to a rear support frame 14 supported by a support frame (draft lug) 21. The length L1 of the energy absorbing pipe members 12L and 12R is set equal to or larger than the spacing L2 between the coupler face 11a of the coupler 11 and the front end of the vehicle body frame 13. The energy absorbing pipe members 12L and 12R are laterally symmetric so as to receive a collision load properly in balance.

A lower portion of the coupler 11 is supported by a cross member 16 of the vehicle body frame 13 extending in the lateral direction of the vehicle body by means of a bearing member 15.

The rubber damper 1 is supported by the support frame (draft lug) 21 to be movable in the longitudinal direction of the vehicle body. Two brackets 22L and 22R are arranged on right and left sides in the lateral direction and attached to a front end portion of the support frame 21. A spacing W1 between the right and left brackets 22L and 22R is set so that a body 11b (corresponding to a maximum width W2) of the coupler 11 can pass therethrough. Therefore, when the coupler 11 retracts, the body 11b of the coupler 1 does not make contact with the brackets 22L and 22R. This facilitates impact absorption by the rubber damper 1. Right and left support frames 23L and 23R of the support frame 21 are provided with rivet holes 23a. The support frame 21 is fixed to the vehicle body frame 13 by means of a plurality of rivets (not shown).

With the above construction, the axial load is evenly applied on front end faces of the energy absorbing pipe members 12L and 12R that are tubular with square cross-section. When the load is small and the collision energy is small, the collision energy is absorbed by the impact absorbing rubbers 3A and 3B of the rubber damper 1. In this case, the energy absorbing pipe members 12L and 12R are not deformed. When the collision energy is large and the rubber damper 1 finishes a stroke (a deformation stroke) to absorb collision energy, the remaining energy is absorbed by bellows-like deformation of the energy absorbing pipe members 12L and 12R.

The rubber damper 1 is supported by the energy absorbing pipe members 12L and 12R and the length L1 of the energy absorbing pipe members 12L and 12R is set larger than the spacing L2 between the coupler face 11a of the coupler 11 and the front end of the vehicle body frame 13. In the structure in which the support frame of the rubber damper 1 is connected to the vehicle body frame 13 by means of the rivets, by designing the rivets to have proper shear strength, the collision energy which remains unabsorbed as a result of stroke by the rubber damper 1, is absorbed by the bellows-like deformation (plastic deformation) of the collision energy absorbing pipe members 12L and 12R without shear fracture of the rivets until the vehicle body frames collide with each other. When a railway vehicle comprising a plurality of vehicles collide with another vehicle, energy absorbing ability of the energy absorbing pipe members 12L and 12R compensates for insufficient energy absorbing ability of the rubber damper 1. Therefore, on collision between the vehicle body frames 13, the vehicle body frames 13 are not severely damaged or large impact does not act on passengers.

Since the spacing W1 between the right and left brackets 22L and 22R is larger than the maximum width W2 of the body 11b of the coupler 11, the body 11b can pass through the spacing W1 between them in collision. That is, the coupler 11 linearly retracts. As a result, the rubber damper 1 and the energy absorbing pipe members 12L and 12R are axially pushed to be deformed favorably to absorb the collision energy.

Here, a description will be given of the reason why when the energy absorbing pipe members 12L and 12R that are tubular with square cross-section satisfies the formula (1), the pipe members 12L and 12R are plastically deformed to efficiently absorb the collision energy.

First, a buckling stress σ c r of an elastic area of a flat plate is calculated according to the following formula (3):

$$\sigma c r = k \{ \pi^2 E / 12 (1 - \nu^2) \} (t / B)^2 \qquad\qquad (3)$$

where k (= 4) is a buckling coefficient, E is Young's modulus of a material of the flat plate, ν (= 0.3) is Poisson's ratio, t is a thickness of the flat plate, and B is a width of the flat plate.

When the buckling stress σ c r is greater than the yield stress of the material, the flat plates of the pipe with square cross-section (corresponding to the energy absorbing pipe members 12L and 12R) are plastically buckled. In this case, the following formula (4) is satisfied:

$$\sigma\, c\, r = k\,\{\pi^2 E / 12(1-\nu^2)\}(t/B)^2 \ge \sigma\, y$$

$$(t/B)(E/\sigma\, y)^{\frac{1}{2}}(=A) \ge \{12(1-\nu^2)/K\pi^2\}^{\frac{1}{2}}$$

$$=0.526$$

$$B \le (t/0.526)(E/\sigma\, y)^{\frac{1}{2}} \qquad\qquad (4)$$

According to the formula (4), the relationship between the width B and the thickness t of the flat plate is determined by the Young's modulus E and the yield stress σ y. Specifically, when A exceeds 0.526, the flat plates are plastically buckled.

Table 1 illustrates a result of calculation values and experimental values obtained when pipes with square cross-section and various dimensions and thicknesses are axially crushed in a quasi-static state. As can be understood from the Table 1, when these values satisfy the condition under which the flat plates are plastically deformed, α is very near β.

Table 1

| Type | Material | σ y (N/mm$^2$) | σ b (N/mm$^2$) | B (mm) | t (mm) | (B-2R)/t | α (kN) | β (kN) | α / β | A |
|---|---|---|---|---|---|---|---|---|---|---|
| 100R10t1.6 | SPA-C | 315 | 450 | 100 | 1.6 | 50 | 38.7 | 59.5 | 0.65 | 0.38 |
| 150R15t2.3 | | | | 150 | 2.3 | 52 | 83.7 | 124.9 | 0.67 | 0.39 |
| 150R10t2.3 | | | | 150 | 2.3 | 57 | 83.2 | 124.9 | 0.67 | 0.39 |
| 100R8t4 | STKR400 | 245 | 400 | 100 | 4 | 21 | 243.9 | 235.5 | 1.04 | 1.16 |
| 100R6.4t3.2 | | | | 100 | 3.2 | 27 | 152.8 | 163.7 | 0.93 | 0.93 |
| 150R9t4.5 | | | | 150 | 4.5 | 29 | 257.0 | 331.6 | 0.78 | 0.86 |

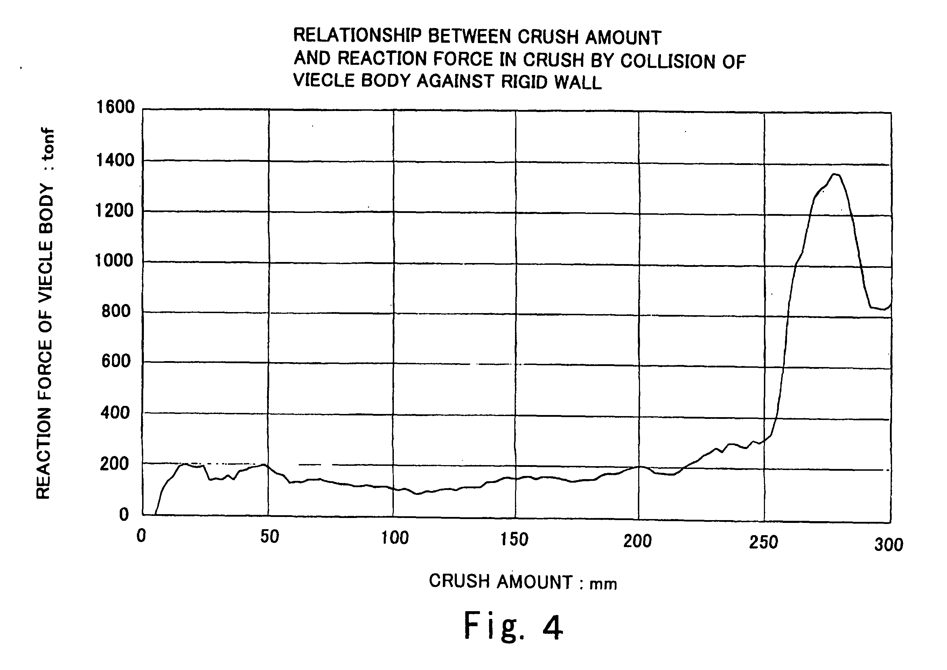

In Table 1, o b is tensile strength, R is a curvature radius of a corner portion of the cross-section of the pipe, and α is an experimental value of a mean reaction force. From a reaction force - crush amount graph (see Fig. 4) that represents the relationship between a load (= reaction force) and displacement (deformed distance) in crush of the pipe with square cross-section (energy absorbing member), which is obtained in advance, energy is calculated, and based on the calculated energy, the mean reaction force α is calculated.

β is a calculation value of the mean reaction force obtained from the following formula (5) (formula proposed by W. Abramowicz and T. Wierzbicki). The formula (5) is a simplified evaluation formula for the pipe with square cross-section under the condition in which a plastic work obtained from bending and extension corresponding to a deformation mode in crush is equal to a work done by an external force.

$$\beta = 12.16\,\sigma\, o\, B^{0.37}\, t^{1.63} \qquad\qquad (5)$$

where σ o is equal to 0.92 σ b, σ b is tensile strength, B is a width of the flat plate, and t is a thickness of the flat plate.

"A" in Table 1 is represented by the following formula (6):

$$A = (t/B)(E/\sigma\, y)^{1/2} \qquad\qquad (6)$$

As described above, when A is larger than 0.526, the experimental value α is almost equal to the calculation value β derived from the formula (5), and a reaction force higher than that of elastic buckling is gained. Therefore, more efficient energy absorption is achieved in equal weight.

This follows that smaller energy absorbing pipe members 12L and 12R serve energy absorbing elements capable of efficiently absorbing energy. Further, according to the formula (5), the width and thickness of the flat plate of the absorbing element are designed to gain a target reaction force.

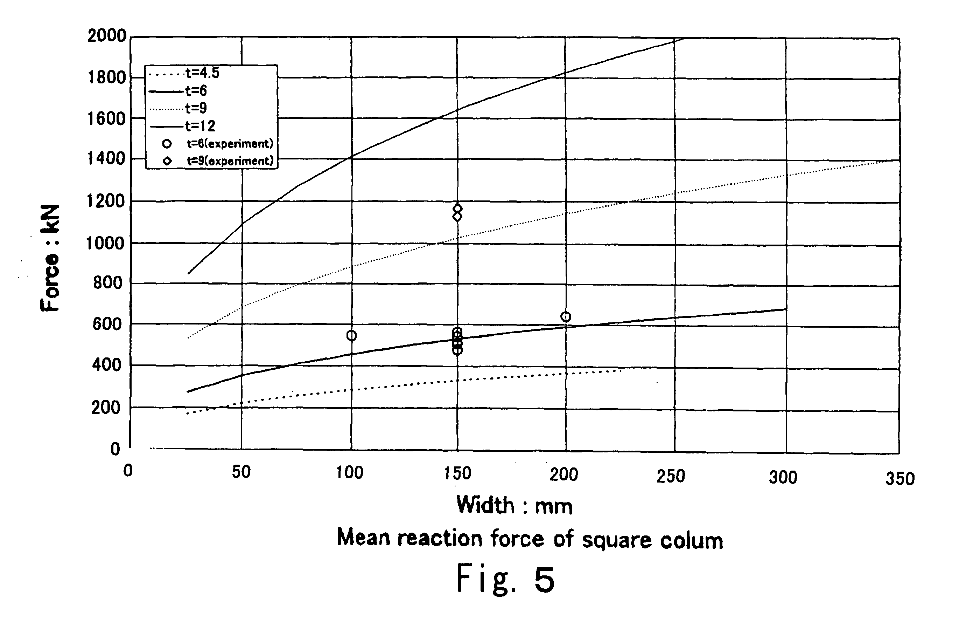

Fig. 5 illustrates that values calculated according to the formula (5) for the pipes with square cross-section that satisfy the formula (1) and have thicknesses t = 4.5mm, 6mm, 9mm and 12 mm, in conjunction with a dynamic experiment result of crush of the pipe (thickness t = 6. 9 mm). As can be seen from Fig. 5, it is estimated that the formula (5) is established when the pipe receives a dynamic load. In Fig. 5, longitudinal axis represents a mean reaction force and a lateral axis represents a width of the flat plate of the pipe.

(Dynamic Experiment Method)

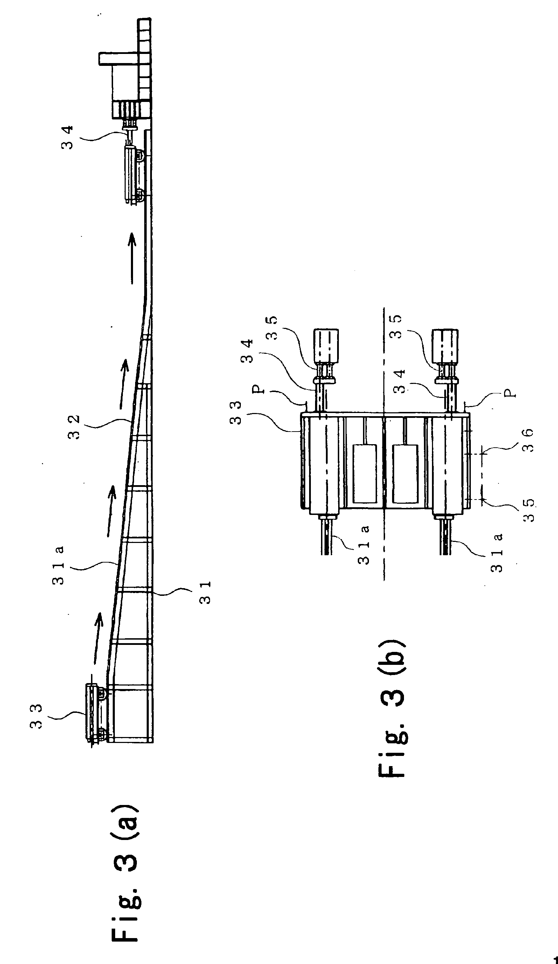

As shown in Fig. 3(a) and 3(b), a slope 31 having an inclined surface 31a with inclination of 1: 10 is prepared and rails 32 are installed on the inclined surface 31a. Assume that a moving barrier 33 with weight of about 13t is traveled (at a speed of about 19km/h in collision) on the rails 32 and is collided against a pipe 34 with square cross-section (corresponding to the energy absorbing member) fixed at a reaction post to cause the pipe 34 to crush. The resulting reaction force is measured by load cells 35. Displacement of a front end face 33a the moving barrier 33 is measured by a laser displacement sensor (not shown) at an observation point P. From measured values of the reaction force and displacement, a load - displacement curve is derived. The curve is integrated to obtain energy values, from which the mean crush reaction force is calculated. By using reflectors provided on the moving barrier 33 and first and second photoelectric sensors 35 and 36 fixed to be spaced a predetermined distance apart from each other, time between first reflection and second reflection is measured. From a measured value, a speed just before the collision is calculated.

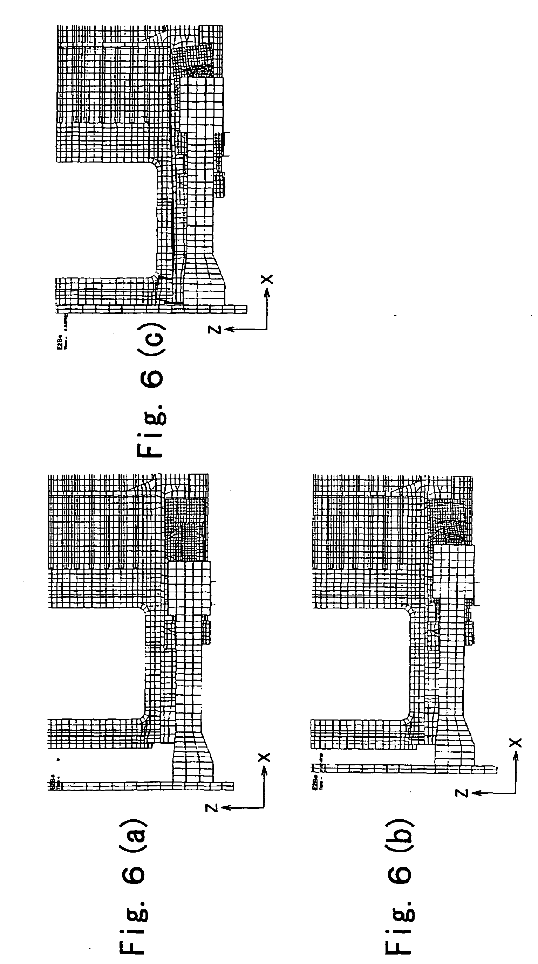

Fig. 4 and Figs. 6(a) to 6(c) illustrate simulation analysis results of a vehicle body having the structure of the present invention. Here, it is assumed that the vehicle body collides against a rigid wall and receives a collision load. Figs. 6(a) to 6(c) represent deformations occurring when strokes Dc corresponding to crush amount in simulation are 0mm, 125mm, and 250mm, respectively.

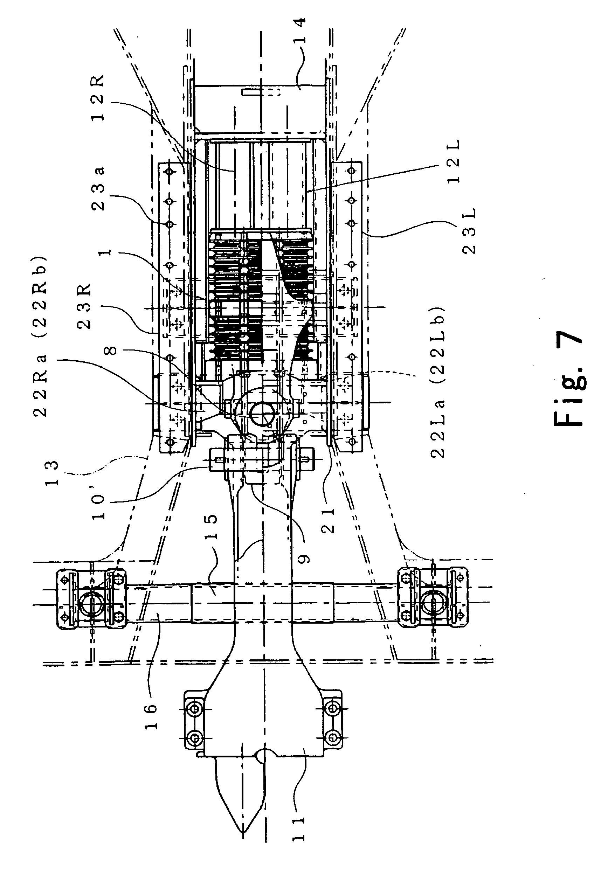

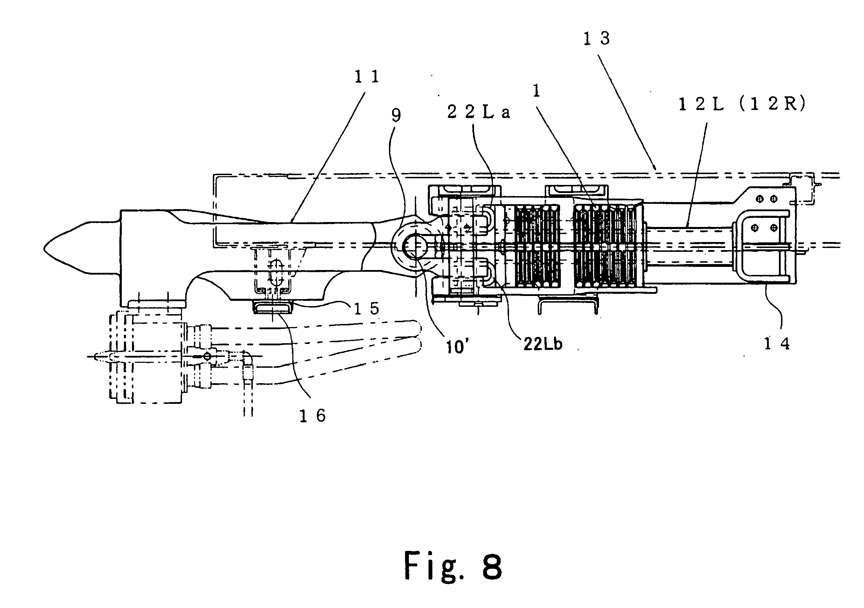

The brackets 22L and 22R are provided on right and left sides in the lateral direction within the support frame 21, but this is only illustrative. Alternatively, when the connecting pin is greatly protruded laterally from the body of the coupler, the right and left brackets may be comprised of upper and lower brackets to permit the connecting pin to retract. In this case, as shown in Figs. 7 and 8, a vertical spacing between an upper bracket 22La and a lower bracket 22Lb, and a vertical spacing between an upper bracket 22Ra and a lower bracket 22Rb are set larger than a diameter of a connecting pin 10'. This structure is identical to that of the structure in Figs. 1 and 2 except that the right and left brackets 22La and 22Ra in Figs. 1 and 2 are the upper brackets 22La and 22Ra and the lower brackets 22Ra and 22Rb.

In the above embodiment, by setting the length L1 of the energy absorbing pipe members 12L and 12R larger than the spacing L2 between the coupler face of the coupler 11 and the front end of the vehicle body frame 13 in the structure in which the support frame 21 of the rubber damper 1 is riveted to the vehicle body frame 13, the collision energy is absorbed by the energy absorbing members until the vehicle body frames collide with each other after the rubber damper 1 finishes a stroke by retraction of the coupler 11. Nonetheless, the length L1 is not necessarily larger than the spacing L2. For example, the length L1 may be set slightly shorter than the spacing L2, and the rivets may shear and fracture, after the rubber damper finishes a stroke by retraction of the coupler. In this structure, the collision energy can be absorbed by the energy absorbing members until the vehicle body frames collides with each other in almost the same manner as described above.

Numerous modifications and alternative embodiments of the invention will be apparent to those skilled in the art in view of the foregoing description. Accordingly, the description is to be construed as illustrative only, and is provided for the purpose of teaching those skilled in the art the best mode of carrying out the invention.

**Claims**

1. A railway vehicle, comprising a coupler (11), a rubber damper (1) coupled to a body (11b) of the coupler (11) by a connecting pin (10), and an energy absorbing member (12L, 12R) that is tubular and has a square cross-section over the whole length thereof, which are arranged in this order in a longitudinal direction of a vehicle body of the vehicle, in which a vehicle body frame (13) is configured to receive a collision load in the longitudinal direction of the vehicle body which is transmitted through the energy absorbing member (12L, 12R), where

    the rubber damper (1) is supported within a support frame (21) attached to the vehicle body frame (13) and

the body (11b) of the coupler (11) is retractable into the support frame (21) when collision of the vehicle occurs; **characterized in that:** when Young's modulus of a material of the energy absorbing member (12L, 12R) is E and a yield stress of the material is $\sigma y$, a relationship between a width B of the member (12L, 12R) and a wall thickness t of the member (12L, 12R) is represented by

$$B \le (t / 0.526)(E / \sigma y)^{1/2}.$$

2. The railway vehicle according to Claim 1, wherein when a length of the energy absorbing member (12L, 12R) is L1 and a spacing between a coupler face (11a) of the coupler (11) and a front end of the vehicle body frame (13) is L2, a relationship between the length L1 and the spacing L2 satisfies $L1 \ge L2$.

3. The railway vehicle according to Claim 1 or 2, wherein:

   - the rubber damper (1) has a coupling portion coupled to the coupler (11) at a front portion thereof and the coupling portion is coupled to the coupler (11) through a spacing (W1) between brackets (22L, 22R) arranged in a lateral direction of the vehicle body at a front portion of the support frame (21), and
   - the spacing (W1) between the brackets (22L, 22R) in the lateral direction of the vehicle body is sized to permit the body (11b) of the coupler (11) to pass therethrough.

4. The railway vehicle according to Claim 3, wherein the brackets (22L, 22R) arranged in the lateral direction are each comprised of upper and lower brackets (22La, 22Lb, 22Ra, 22Rb) arranged to have a spacing between the upper and lower brackets (22La, 22Lb, 22Ra, 22Rb) in a vertical direction of the vehicle body and the spacing between the upper and lower brackets (22La, 22Lb, 22Ra, 22Rb) is sized so that the connecting pin (10) extending in the lateral direction of the vehicle body to connect a rear end portion of the coupler (11) to the rubber damper (1) pass therethrough.

**Patentansprüche**

1. Schienenfahrzeug, welches eine Kupplung (11), einen Gummidämpfer (1), der mit einem Korpus (11b) der Kupplung (11) durch einen Verbindungsbolzen (10)

   gekoppelt ist, und ein energieabsorbierendes Element (12L, 12R), das rohrförmig ist und über seine gesamte Länge einen rechteckigen Querschnitt aufweist, umfasst,
   wobei diese in dieser Reihenfolge in einer Längsrichtung eines Fahrzeugkörpers des Fahrzeugs angeordnet sind, wobei ein Fahrzeugkörper-Rahmen (13) dafür konfiguriert ist, eine Kollisionslast in der Längsrichtung des Fahrzeugkörpers, die über das energieabsorbierende Element (12L, 12R) übertragen wird, aufzunehmen,
   wobei
   der Gummidämpfer (1) in einem Stützrahmen (21) gehalten wird, der an dem Fahrzeugkörper-Rahmen (13) angebracht ist, und
   der Korpus (11b) der Kupplung (11) in den Stützrahmen (21) einschiebbar ist, wenn eine Kollision des Fahrzeugs auftritt,
   **dadurch gekennzeichnet, dass,**
   wenn E der Elastizitätsmodul eines Materials des energieabsorbierenden Elements (12L, 12R) ist und $\sigma y$ eine Streckgrenze des Materials ist, sich eine Beziehung zwischen einer Breite B des Elements (12L, 12R) und einer Wanddicke t des Elements (12L, 12R) darstellen lässt durch $B \le (t/0,526)(E/\sigma y)^{1/2}$.

2. Schienenfahrzeug nach Anspruch 1, bei welchem, wenn L1 eine Länge des energieabsorbierenden Elements (12L, 12R) ist und L2 ein Abstand zwischen einer Kupplungsfläche (11a) der Kupplung (11) und einem vorderen Ende des Fahrzeugkörper-Rahmens (13) ist, eine Beziehung $L1 \ge L2$ zwischen der Länge L1 und dem Abstand L2 erfüllt ist.

3. Schienenfahrzeug nach Anspruch 1 oder 2, bei welchem:

   - der Gummidämpfer (1) einen Kupplungsteil aufweist, der an einem vorderen Abschnitt der Kupplung (11) mit dieser gekoppelt ist, und wobei der Kupplungsteil mit der Kupplung (11) über einen Abstand (W1) zwischen Halterungen (22L, 22R) gekoppelt ist, die in einer Querrichtung des Fahrzeugkörpers an einem vorderen Abschnitt des Stützrahmens (21) angeordnet sind, und
- der Abstand (W1) zwischen den Halterungen (22L, 22R) in der Querrichtung des Fahrzeugkörpers derart bemessen ist, dass der Korpus (11b) der Kupplung (11) zwischen diesen hindurchpasst.

**4.** Schienenfahrzeug nach Anspruch 3, bei welchem die Halterungen (22L, 22R), die in der Querrichtung angeordnet sind, jeweils eine obere und eine untere Halterung (22La, 22Lb, 22Ra, 22Rb) umfassen, welche derart angeordnet sind, dass ein Abstand zwischen den oberen und den unteren Halterungen (22La, 22Lb, 22Ra, 22Rb) in einer vertikalen Richtung des Fahrzeugkörpers gegeben ist und der Abstand zwischen den oberen und den unteren Halterungen (22La, 22Lb, 22Ra, 22Rb) derart bemessen ist, dass der Verbindungsbolzen (10), der sich in der Querrichtung des Fahrzeugkörpers erstreckt, um einen hinteren Endabschnitt der Kupplung (11) mit dem Gummidämpfer (1) zu verbinden, durch diese hindurchpasst.

**Revendications**

**1.** Véhicule de chemin de fer, comprenant un attelage (11), un amortisseur (1) en caoutchouc accouplé à un corps (11b) de l'attelage (11) par une tige de liaison (10), et un élément d'absorption d'énergie (12L, 12R) qui est tubulaire et qui a une section transversale carrée sur sa longueur entière, qui sont agencés dans cet ordre dans une direction longitudinale d'une carrosserie de véhicule du véhicule, dans lequel un châssis de véhicule (13) est configuré pour recevoir une charge de collision dans la direction longitudinale de la carrosserie de véhicule qui est transmise par l'intermédiaire de l'élément d'absorption d'énergie (12L, 12R), dans lequel

l'amortisseur (1) en caoutchouc est supporté dans un cadre de support (21) fixé au châssis de véhicule (13) et le corps (11b) de l'attelage (11) peut se rétracter dans le cadre de support (21) lorsqu'une collision du véhicule se produit ;
**caractérisé en ce que**
lorsque le module de Young d'un matériau de l'élément d'absorption d'énergie (12L, 12R) est E et qu'une contrainte à la limite élastique du matériau est σy, une relation entre une largeur B de l'élément (12L, 12R) et une épaisseur de paroi t de l'élément (12L, 12R) est représentée par

$$B \leq (t/0{,}526)\,(E/\sigma y)^{1/2}.$$

**2.** Véhicule de chemin de fer selon la revendication 1, dans lequel, lorsqu'une longueur de l'élément d'absorption d'énergie (12L, 12R) est L1 et qu'un espacement entre une face d'attelage (11a) de l'attelage (11) et une extrémité avant du châssis de véhicule (13) est L2, une relation entre la longueur L1 et l'espacement L2 satisfait la relation L1 $\geq$ L2.

**3.** Véhicule de chemin de fer selon la revendication 1 ou 2, dans lequel :

- l'amortisseur (1) en caoutchouc a une partie d'accouplement accouplée à l'attelage (11) dans une partie avant de celui-ci et la partie d'accouplement est accouplée à l'attelage (11) à travers un espacement (W1) entre des supports (22L, 22R) agencés dans une direction latérale de la carrosserie de véhicule au niveau d'une partie avant du cadre de support (21), et
- l'espacement (W1) entre les supports (22L, 22R) dans la direction latérale de la carrosserie de véhicule est dimensionné pour permettre au corps (11b) de l'attelage (11) de passer à travers celui-ci.

**4.** Véhicule de chemin de fer selon la revendication 3, dans lequel les supports (22L, 22R) agencés dans la direction latérale sont composés chacun de supports supérieurs et inférieurs (22La, 22Lb, 22Ra, 22Rb) agencés pour avoir un espacement entre les supports supérieurs et inférieurs (22La, 22Lb, 22Ra, 22Rb) dans une direction verticale de la carrosserie de véhicule et l'espacement entre les supports supérieurs et inférieurs (22La, 22Lb, 22Ra, 22Rb) est dimensionné de sorte que la tige de liaison (10) s'étendant dans la direction latérale de la carrosserie de véhicule pour relier une partie d'extrémité arrière de l'attelage (11) à l'amortisseur (1) en caoutchouc passe à travers celui-ci.

EP 1 468 889 B1

Fig. 1

Fig. 2

Fig. 3 (a)

3 3

3 1 a

3 2

3 4

3 1

Fig. 3 (b)

3 3

P

3 4

3 5

3 1 a

3 4

3 5

3 1 a

3 5

3 6

P

EP 1 468 889 B1

RELATIONSHIP BETWEEN CRUSH AMOUNT
AND REACTION FORCE IN CRUSH BY COLLISION OF
VIECLE BODY AGAINST RIGID WALL

Fig. 4

EP 1 468 889 B1

Mean reaction force of square colum

Fig. 5

Fig. 6 (a)

Fig. 6 (b)

Fig. 6 (c)

Fig. 7

Fig. 8

EP 1 468 889 B1

**Fig. 9**

EP 1 468 889 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2698840 A
- EP 1251054 A2

- JP HEI7186951 B